# EUROPEAN PATENT SPECIFICATION

(11) **EP 4 564 739 B1**
(45) Date of publication and mention of the grant of the patent: **20.05.2026**
(21) Application number: 23212882.7
(22) Date of filing: 29.11.2023
(51) Int. Cl.: H04L 9/40, G06F 21/85

(54) **FILTER DEVICE AND METHOD FOR COMMUNICATION BETWEEN A TRUSTED DOMAIN AND AN UNTRUSTED DOMAIN, AND COMPUTER SYSTEM**
FILTERVORRICHTUNG UND VERFAHREN ZUR KOMMUNIKATION ZWISCHEN EINER VERTRAUENSWÜRDIGEN DOMÄNE UND EINER UNSICHEREN DOMÄNE SOWIE COMPUTERSYSTEM
DISPOSITIF DE FILTRAGE ET PROCÉDÉ DE COMMUNICATION ENTRE UN DOMAINE DE CONFIANCE ET UN DOMAINE NON SÉCURISÉ, ET SYSTÈME INFORMATIQUE

(43) Date of publication of application: 04.06.2025
(73) Proprietor: Airbus Operations GmbH, 21129 Hamburg (DE)
(72) Inventor: Kliem, Daniel Alexander, 21129 Hamburg (DE); Hollander, Jens, 21129 Hamburg (DE)

(56) References cited:
- US-A1- 2005 182 950
- US-A1- 2023 353 536

## Description

### TECHNICAL FIELD OF THE INVENTION

The invention relates to a filter device as well as to a method for communication between a trusted domain and an untrusted domain, and a computer system for an aircraft comprising the filter device.

### TECHNICAL BACKGROUND

In information technology, firewalls and gateway functions are often realized as software functions e.g. based on a Linux operating system kernel including a net filter stack or respective implementations of the BSD/OS Unix operating system. These measures have the benefit of widespread use. However, due to security requirements for an aircraft, such as High-Security Assurance Level requirements, which require detailed evidence for the correctness of all parts of the barrier, an embedded solution is preferred that is tailored to the needs of such application.

Examples of existing gateway and network filtering architectures are disclosed in US2023/353536A1 and US2005/182950A1, which describe sequential filtering chains and packet-based hardware/software filtering systems, respectively.

The problem of the present invention is thus to provide a device for secure communication with improved flexibility and simplicity.

### SUMMARY OF THE INVENTION

According to the invention, this problem is solved in each case by the subject matters of the independent claims.

According to a first aspect of the invention, a filter device for communication between a trusted domain and an untrusted domain is provided. The filter device comprises a central processing unit, CPU, and a hardware programmable device connected to the CPU, the hardware programmable device comprising: a first input/output, I/O, interface connected to the untrusted domain and a second I/O interface connected to the trusted domain, wherein the first and second I/O interfaces are configured to receive and transmit data frames from and to the respective untrusted and trusted domain, a first filter channel configured to filter a first data frame received from the first I/O interface and provide a first filtered data frame to the second I/O interface, and a second filter channel configured to filter a second data frame received from the second I/O interface and provide a second filtered data frame to the first I/O interface; wherein each of the first and second filter channels comprises: at least two filter chains selected from a hardware filter chain and/or a software filter chain, wherein the hardware filter chain and the software filter chain comprise hardware filter circuitry and the software filter chain comprises software circuitry connected to the CPU, a demultiplexer configured to receive the respective first and second data frames from the respective first and second I/O interfaces, classify data streams of the respective first and second data frames according to at least one attribute, and input the data streams into the hardware filter chain and the software filter chain according to their classification to provide filtered data streams, a multiplexer configured to combine the filtered data streams from the hardware filter chain and the software filter chain to provide respective first and second filtered data frames and transmit the first and second filtered data frames to the respective second and first I/O interfaces.

According to a second aspect of the invention, a method for communication between an untrusted domain and a trusted domain for communication between an untrusted domain and a trusted domain is provided. The method comprises receiving data frames from one of the trusted domain and the untrusted domain by an input/output I/O interface, classifying the received data frames according to at least one attribute by a demultiplexer to provide classified data streams, inputting the classified data streams into at least two filter chains selected from a hardware filter chain and/or a software filter chain according to their classification, wherein the hardware filter chain and the software filter chain comprise hardware filter circuitry on a hardware programmable device, and wherein the software filter chain comprises software circuitry connected to a central processing unit, CPU, filtering the classified data streams by the hardware and software filter circuitry to provide filtered data streams, combining the filtered data streams from the hardware filter chain and the software filter chain by a multiplexer to provide filtered data frames, transmitting filtered data frames to the other of the trusted domain and the untrusted domain.

According to a third aspect of the invention, a computer system is provided. The computer system comprises a trusted domain, an untrusted domain, and an inventive filter device connected to the trusted domain and untrusted domain of the computer system.

A fundamental concept of the invention is to realize a barrier in a modular approach, to identify needed modules and to select for each module whether it is best implemented by means of (programmable) hardware or software means, such as hardware or software filters.

This present invention employs a combination of a general purpose Central Processing Unit (CPU) to run the software filters and programmable hardware (Custom) Device (such as a Field-Programmable Gate Array FPGA). Both parts, the CPU, i.e. the software, and the hardware programmable device, such as the FPGA are connected by adequately fast data interfaces.

By the modular approach and application of hardware/software co-design the solution is observable by each modular component or block, scalable by modular blocks and an addition of further blocks is possible. The filter device provides high-performance, low-latency hardware-based implementations.

A particular advantage in the solution according to an aspect of the invention is the realization of some of the modules by means of FPGA / programmable hardware. In a long-running, large project not all future needs are known a-priori. FPGA/ Programmable hardware in combination with software provides the benefit of field loadability, i.e. replacing programmable hardware blocks in the field. This combines flexibility with performance and scalability.

The filter device of the present invention is thus a realization of an Ethernet frame checker, filter and translator that performs correctness checks of incoming and outgoing data that contain data frames.

The filter device classifies the data frames into so-called "streams" based on properties such as frame attributes. The filter device then performs filtering, such as e.g. rate-limiting and starvation protection per stream and in-depth analysis of a stream's frame content. The filter device of the present invention may further be configured to rewrite stream contents in a non-uniform translation ("protocol-breach"), performing stateful checking and filtering by considering incoming and outgoing traffic, performing checking and filtering based on conditions that are controlled from the secure side. The filter device is observable by means of statistics and event counters per stream.

The computer system preferably is a or a part of an aircraft management system onboard an aircraft. In this case, critical parts of the aircraft management system e.g. related to the navigation of the aircraft, may be located in the trusted domain and require to be protected from attacks by the filter device.

Advantageous embodiments and further developments emerge from the description with reference to the figures.

According to some aspects of the filter device according to the invention, each of the hardware circuitry comprises a stream filter and a rate limiter configured to limit a data rate of the data stream. The stream filter implements a protocol-specific state machine that can inspect individual frames based on data that is gathered when iterating over a single frame. A go / no-go decision is formed by these state machines finally. In case of a "go" decision, depending on the connection, some frames are directly forwarded, while for other streams the frames are put into a buffer memory, such as a FIFO buffer, for further inspections by the software translators and inspectors. The rate limiter ensures that for a particular stream excessive load attacks, e.g. denial of service, can be blocked and that the secure side cannot be overloaded.

According to some further aspects of the filter device according to the invention, the hardware filter circuitry of the software filter chains and the hardware filter chains of the first and second filter channels are identical. In this way, the filter circuitries can be implemented as modules so that these are interchangeable between the first and second filter channels. It further allows additional filter channels when these are needed due to new requirements, e.g. in an aircraft.

According to some further aspects of the filter device according to the invention, the software circuitry is arranged downstream of the hardware circuitry in the software filter chains. In this way, the data signal may be filtered first by the hardware filter circuitry thereby removing potential threats for the software and CPU before being filtered by the CPU. In this way, the security the filter device is able to provide is improved.

According to some further aspects of the filter device according to the invention, the first filter channel and/or the second filter channel comprises a plurality of hardware filter chains and/or a plurality of software filter chains coupled between the respective demultiplexer and multiplexer, wherein the respective demultiplexers and multiplexers are configured to classify the received data frames according to at least one attribute, input the classified data streams of the data frames to one of the respective plurality of hardware filter chains and/or the plurality of software filter chains according to their classification and combine the filtered data streams to provide the first and second filtered frames. The first and second filter channels may comprise different numbers of hardware filter chains and software filter chains. For example, the first and second filter chains may comprise two software filter chains and no hardware filter chain, or three software filter chains and five hardware filter chains. Further combinations are thinkable. In this way, the flexibility of the filter device is increased as it can provide more filter channels for filtering particular potential threats.

According to some further aspects of the filter device according to the invention, the I/O interfaces are configured as a Media Access Control, MAC, interface. The MAC interface is a physical layer of the Ethernet to send and receive frames. The MAC interface includes checkers for basic parameters of ingress frames such as size, and correctness of the frame checksum. This is done prior to stream classification in order to avoid decision-making that is based on corrupted frame data.

According to some further aspects of the filter device according to the invention, the CPU comprises a translator and inspector software block connected to the software circuitry and configured to inspect a state of the data received from the software circuitry and receive pre-filtered data from the software filter chain and translate between different protocols of the received data. The inspector can derive stateful behavior within and between data streams and even between incoming and outgoing directions. It thus improves the capability of filtering potentially insecure data by this software circuitry. This translator is an additional security benefit to terminate incoming protocols on the non-trusted side of the barrier and continue the flow with another protocol.

According to some further aspects of the filter device according to the invention, the CPU comprises a control and monitoring software block configured to communicate only with the second I/O interface of the programmable hardware connected to the trusted domain. With this control and monitoring software block, it is possible to securely reprogram the programmable hardware. Therefore, monitoring and configuration cannot be exposed to the insecure side, i.e. the untrusted domain, in order to prevent attacks on the barrier itself.

According to some further aspects of the filter device according to the invention, the software circuitry is configured as a buffer memory, in particular a FIFO buffer, to perform an exchange of data with the software unit. In this way, the data signals can be stored and retrieved by the CPU when needed.

The above embodiments and further developments can be combined with each other as desired, if useful. In particular, all features of the filter device are transferable to the method for assembling the display device, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

### BRIEF SUMMARY OF THE DRAWINGS

The present invention is explained more specifically below on the basis of the exemplary embodiments indicated in the schematic figures, in which:
- Fig. 1: shows a schematic illustration of a filter device for communication between a trusted domain and an untrusted domain according to an embodiment of the invention;
- Fig. 2: shows a schematic illustration of a filter device for communication between a trusted domain and an untrusted domain according to a further embodiment of the invention;
- Fig. 3: shows a schematic illustration of an computer system for an aircraft according to an embodiment of the invention; and
- Fig. 4: shows a flow chart for a method for communication between a trusted domain and an untrusted domain according to a further embodiment of the invention.

In the figures of the drawing, elements, features and components that are the same, have the same function and have the same effect are each provided with the same reference signs - unless explained otherwise.

### DESCRIPTION OF EXEMPLARY EMBODIMENTS

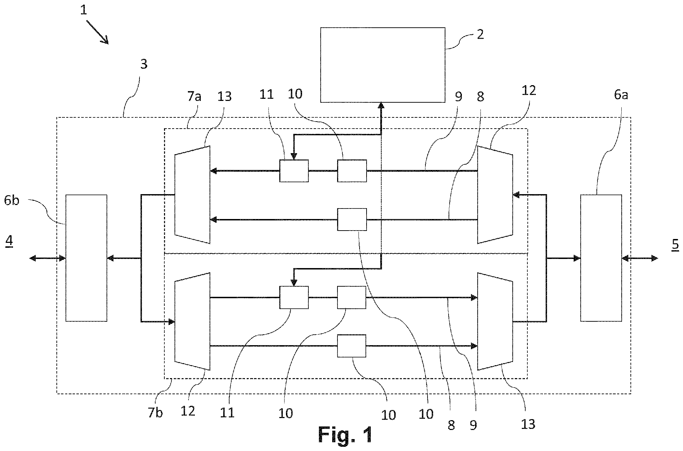

Fig. 1 shows a schematic illustration of a filter device 1 for communication between a trusted domain 4 and an untrusted domain 5 according to an embodiment of the invention.

The filter device 1 comprises a central processing unit, CPU 2. The CPU thus represents a general purpose software block that can be programmed by software freely. Typical commercially available CPU can be employed for this task.

The filter device further comprises a hardware programmable device 3 connected to the CPU 3. In some embodiments, the hardware programmable device is configured as a Field-programmable Gate Array, FPGA. The filter device 1 thus includes a combination of a general-purpose CPU to run the software filters and a programmable hardware custom Device. Both parts, CPU 2, i.e. the software, and the programmable hardware device 3, e.g. the FPGA, are connected by adequately fast data interfaces.

The hardware programmable device 3 comprises a first input/output, I/O, interface 6a connected to the untrusted domain 5. The hardware programmable device 3 further comprises a second I/O interface 6b that is connected to the trusted domain 4. The first I/O interface 6a is configured to receive and transmit data frames from and to the untrusted domain 4. The second I/O interface 6b is configured to receive and transmit data frames from and to the trusted domain 5.

In preferred embodiments, the first and second I/O interfaces 6a, 6b are configured as a Media Access Control, MAC, interface. The MAC interface is a physical layer of the Ethernet to send and receive frames. As described above, the MAC interface includes checkers for basic parameters of ingress frames such as size, and correctness of the frame checksum. A data frame typically includes frame synchronization features consisting of a sequence of bits or symbols that indicate to the receiver the beginning and end of the payload data within the stream of symbols or bits it receives.

The hardware programmable device 3 further comprises a first filter channel 7a that is configured to filter a first data frame received from the first I/O interface 6a and provide a first filtered data frame to the second I/O interface 6b. The hardware programmable device 3 further comprises a second filter channel 7b configured to filter a second data frame received from the second I/O interface 6b and provide a second filtered data frame to the first I/O interface 6a.

Each of the first and second filter channels 7a, 7b comprises a hardware filter chain 8 and a software filter chain 9. The hardware filter chain 8 and the software filter chain 9 comprise hardware filter circuitry 10 and the software filter chain 9 comprises software circuitry 11 connected to the CPU 2. In the embodiment shown in Fig. 1, the software circuitry 11 is arranged downstream of the hardware circuitry 10 in the software filter chains 9. In this way, the data signal may be filtered first by the hardware filter circuitry thereby removing potential threats for the software and CPU before being filtered by the CPU. In this way, the security is improved.

Each of the first and second filter channels 7a, 7b further comprises a demultiplexer 12 that is configured to receive the respective first and second data frames from the respective first and second I/O interfaces 6a, 6b, classify data streams of the respective first and second data frames according to at least one attribute, and input the data streams into the hardware filter chain 8 and the software filter chain 9 according to their classification to provide filtered data streams. The demultiplexer 12 thus inspects frame fields as attributes, such as source and destination addresses, a frame type, a VLAN tags, IP addresses, UDP ports, and distributes matching frames to respective per-stream filter chains. The stream splitter can perform masked comparisons of frame fields. The demultiplexer 12 can also drop non-matching frames.

In the embodiment shown in Fig. 1, the hardware filter circuitry 10 of the software filter chains 9 of the first and second filter channels 7a, 7b and the hardware filter circuitry 10 of the hardware filter chains 8 of the first and second filter channels 7a, 7b are identical. In this way, the hardware and also software filter circuitries 10, 11 can be implemented as modules so that these are interchangeable between the first and second filter channels. It further allows additional filter channels when these are needed due to new requirements, e.g. in an aircraft.

Each of the first and second filter channels 7a, 7b further comprises a multiplexer 13 that is configured to combine the filtered data streams from the hardware filter chain 8 and the software filter chain 9 to provide respective first and second filtered data frames and transmit the first and second filtered data frames to the respective second and first I/O interfaces 6a, 6b. The multiplexer 13 is the counterpart of the demultiplexer 12. It is necessary to decide the order in which accepted filtered frames can egress the barrier. This multiplexer 12 can also enforce a priority among the filter channels 7a, 7b or stream filter chains that are running in parallel. This effectively enforces prioritization of streams in the traffic and in combination with the rate-limiting blocks also prevents starvation of the streams.

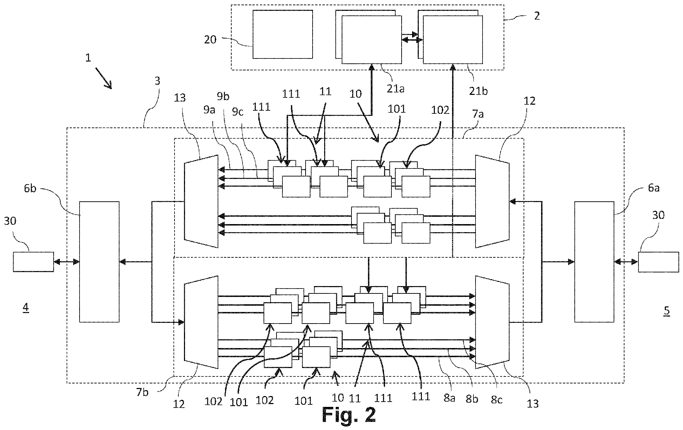

Fig. 2 shows a schematic illustration of a filter device 1 for communication between a trusted domain 4 and an untrusted domain 5 according to a further embodiment of the invention.

The embodiment of the filter device 1 shown in Fig. 2 is based on the filter device 1 described above and shown in Fig. 1.

The first filter channel 7a and the second filter channel 7b comprises at least two selected of a plurality of hardware filter chains 8a-8c and/or a plurality of software filter chains 9a-9c coupled between the respective demultiplexer 12 and multiplexer 13. In this embodiment, each of the first filter channel 7a and the second filter channel 7b each comprises six filter chains, i.e. three hardware filter chains 8 and three software filter chains 9. In further embodiments, the first and second filter channels 7a, 7b comprise different numbers of hardware filter chains 8 and software filter chains 9. In some embodiments, the first and second filter channels 7a,7b comprise two software filter chains 9 and no hardware filter chain 8, or the first and second filter channels 7a,7b comprise three software filter chains 9 and five hardware filter chains 8. Other combinations of the n of software chains 9 and hardware chains 8 are thinkable as well.

The respective demultiplexers 12 and multiplexers 13 are configured to classify the received data frames according to at least one attribute, input the classified data streams of the data frames to one of the respective plurality of hardware filter chains 8a-8c and/or the plurality of software filter chains 9a-9c according to their classification and combine the filtered data streams to provide the first and second filtered frames.

The software circuitry 11 is configured as a buffer memory 111 frames, in particular a FIFO buffer, to perform an exchange of data with the CPU 2. The buffer memory 111 is capable of storing the data streams so that these can be retrieved by the CPU when needed.

In the embodiment of Fig. 2, each of the hardware circuitry 10 comprises a stream filter 101. The hardware circuitry 10 also comprises a rate limiter 102 that is positioned upstream the stream filter 101. The stream filter 101 typically implements a protocol-specific state machine that can inspect individual frames based on data that is gathered when iterating over a single frame. A go / no-go decision is formed by these state machines finally. In case of a "go" decision, depending on the connection, some frames are directly forwarded, while for other streams the frames are put into the buffer memory 111, such as the FIFO buffer, for further inspections by the software translators and inspectors. The rate limiter 102 is configured to limit a data rate of the data stream. The rate limiter 102 ensures that for a particular stream excessive load attacks, e.g. denial of service, can be blocked and that the secure side cannot be overloaded.

In the embodiment of the filter device 1 shown in Fig. 2, the CPU 2 comprises a translator and inspector software block 21a, 21b connected to the software circuitry 11 and configured to inspect a state of the data received from the software circuitry and receive pre-filtered data from the software filter chain and translate between different protocols of the received data.

The CPU 2 further comprises a control and monitoring software block 20 configured to communicate only with the second I/O interface 6b of the programmable hardware 3 connected to the trusted domain 4. The control and monitoring software block 20 is further capable of reprogramming the circuitries in the hardware programmable device. For this, the control and monitoring software block 20 only communicates with the secure side of the I/O interface 6b. In this way, monitoring and configuration cannot be exposed to insecure side, i.e. the untrusted domain 5, in order to prevent attacks to the barrier itself.

Further shown in Fig. 2 is a physical ethernet attachment 30 of the aircraft managment system 100 each connected to the first and second I/O interfaces. The incoming data frames as well as the filtered data frames are thus sent by ethernet through the physical ethernet attachment 30.

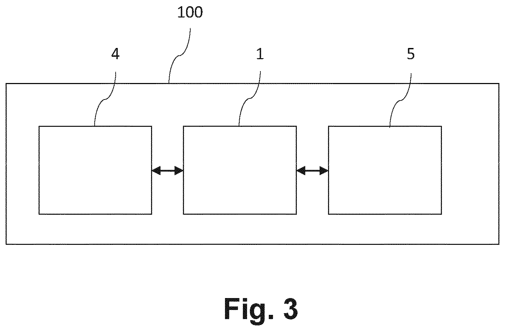

Fig. 3 shows a schematic illustration of a computer system for an aircraft according to an embodiment of the invention.

The computer system 100 shown in Fig. 3 comprises a trusted domain 4, an untrusted domain 5, and a filter device 1 according to an embodiment of the invention. The filter device 1 is connected to the trusted domain 4 and untrusted domain 5 for data exchange. In preferred embodiments, the computer system 100 is integrated in an aircraft. In a preferred embodiment, the computer system 100 is at least a part of an aircraft management system onboard and integrated into an aircraft.

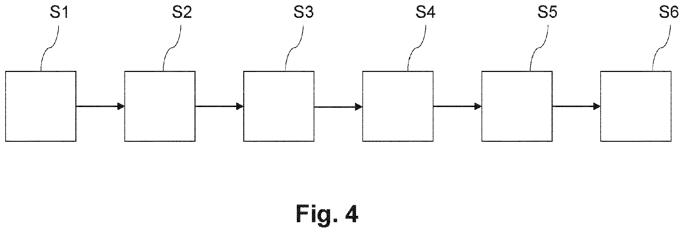

Fig. 4 shows a flow chart for a method for communication between a trusted domain and an untrusted domain according to a further embodiment of the invention.

The Method for communication between a trusted domain 4 and an untrusted domain 5 comprises the step of receiving S1 data frames from one of the trusted domain 4 and the untrusted domain 5 by an input/output I/O interface 6a, 6b. Then, the received data frames are classified S2 according to at least one attribute by a demultiplexer 12 to provide classified data streams. The classified data streams are input S3 into a hardware filter chain 8 and a software filter chain 9according to their classification. The hardware filter chain 8 and the software filter chain 9 comprise hardware filter circuitry 10 on a hardware programmable device 3. The software filter chain 9 further comprises software circuitry 11 connected to a central processing unit, CPU 2. Furthermore, the classified data streams are filtered S4 by the hardware and software filter circuitry 10, 11 to provide filtered data streams. The filtered data streams from the hardware filter chain 8 and the software filter chain 9 are combined S5 by a multiplexer 13 to provide filtered data frames. In an additional step, the filtered data frames are transmitted S6 to the other of the trusted domain 4 and the untrusted domain 5.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, the use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps, which have been described may also be used in combination with other characteristics or steps and in any order unless the disclosure or context suggests otherwise.

### List of reference signs

- 1: filter device Central Processing Unit, CPU
- 2 3: hardware programmable device
- 4: trusted domain
- 5: untrusted domain
- 6a, 6b: input / output, I/O, interface
- 7a, 7b: filter channels
- 8, 8a-c: hardware filter chains
- 9, 9a-c: software filter chains
- 10: hardware filter circuitry
- 11: software filter circuitry
- 20: control and monitoring software block
- 21a, 21b: translator and inspector software block
- 30: Physical Ethernet Attachment
- 100: computer system
- 101: stream filter
- 102: rate filter
- 111: buffer memory

## Claims

1. Filter device (1) for communication between a trusted domain (4) and an untrusted domain (5), comprising:
a central processing unit, CPU (2), and
a hardware programmable device (3) connected to the CPU (3), the hardware programmable device (3) comprising:
a first input/output, I/O, interface (6a) connected to the untrusted domain (5) and a second I/O interface (6b) connected to the trusted domain (4), wherein the first and second I/O interfaces (6a, 6b) are configured to receive and transmit data frames from and to the respective untrusted and trusted domain (4, 5),
a first filter channel (7a) configured to filter a first data frame received from the first I/O interface (6a) and provide a first filtered data frame to the second I/O interface (6b), and
a second filter channel (7b) configured to filter a second data frame received from the second I/O interface (6b) and provide a second filtered data frame to the first I/O interface (6a);
wherein each of the first and second filter channels (7a, 7b) comprises:
at least two filter chains selected from a hardware filter chain (8) and/or a software filter chain (9), wherein the hardware filter chain (8) and the software filter chain (9) comprise hardware filter circuitry (10) and the software filter chain (9) comprises software circuitry (11) connected to the CPU (2),
a demultiplexer (12) configured to receive the respective first and second data frames from the respective first and second I/O interfaces (6a, 6b), classify data streams of the respective first and second data frames according to at least one attribute, and input the data streams into the hardware filter chain (8) and the software filter chain (9) according to their classification to provide filtered data streams,
a multiplexer (13) configured to combine the filtered data streams from the hardware filter chain (8) and the software filter chain (9) to provide respective first and second filtered data frames and transmit the first and second filtered data frames to the respective second and first I/O interfaces (6a, 6b).

2. Filter device (1) according to claim 1, wherein each of the hardware circuitry (10) comprises a stream filter (101) and a rate limiter (102) configured to limit a data rate of the data stream.

3. Filter device (1) according to claim 1 or 2, wherein the hardware filter circuitry (10) of the software filter chains (9) and the hardware filter chains (8) of the first and second filter channels (7a, 7b) are identical.

4. Filter device (1) according to any of the preceding claims, wherein the software circuitry (11) is arranged downstream of the hardware circuitry (10) in the software filter chains (9).

5. Filter device (1) according to any of the preceding claims, wherein the first filter channel (7a) and/or the second filter channel (7b) comprises a plurality of hardware filter chains (8a-8c) and/or a plurality of software filter chains (9a-9c) coupled between the respective demultiplexer (12) and multiplexer (13), wherein the respective demultiplexers (12) and multiplexers (13) are configured to classify the received data frames according to at least one attribute, input the classified data streams of the data frames to one of the respective plurality of hardware filter chains (8a-8c) and/or the plurality of software filter chains (9a-9c) according to their classification and combine the filtered data streams to provide the first and second filtered frames.

6. Filter device according to any of the preceding claims, wherein the I/O interfaces (6a, 6b) are configured as a Media Access Control,MAC, interface.

7. Filter device (1) according to any of the preceding claims, wherein the CPU (2) comprises a translator and inspector software block (21a, 21b) connected to the software circuitry (11) and configured to inspect a state of the data received from the software circuitry and receive pre-filtered data from the software filter chain (9) and translate between different protocols of the received data.

8. Filter device (1) according to any of the preceding claims, wherein the CPU (2) comprises a control and monitoring software block (20) configured to communicate only with the second I/O interface (6b) of the programmable hardware (3) connected to the trusted domain (4).

9. Filter device (1) according to any of the preceding claims, wherein the software circuitry (11) is configured as a buffer memory (111) frames, in particular a FIFO buffer, to perform an exchange of data with the CPU (2).

10. Computer system (100) for an aircraft, comprising a trusted domain (4), an untrusted domain (5), and a filter device (1) according to any of the precedent claims connected to the trusted domain (4) and untrusted domain (5) of the aircraft (1).

11. Method for communication between a trusted domain (4) and an untrusted domain (5), comprising
- receiving (S1) data frames from one of the trusted domain (4) and the untrusted domain (5) by an input/output I/O interface (6a, 6b),
- classifying (S2) the received data frames according to at least one attribute by a demultiplexer (12) to provide classified data streams,
- inputting (S3) the classified data streams into at least two filter chains selected from a hardware filter chain (8) and/or a software filter chain (9) according to their classification, wherein the hardware filter chain (8) and the software filter chain (9) comprise hardware filter circuitry (10) on a hardware programmable device (3), and wherein the software filter chain (9) comprises software circuitry (11) connected to a central processing unit, CPU (2),
- filtering (S4) the classified data streams by the hardware and software filter circuitry (10, 11) to provide filtered data streams,
- combining (S5) the filtered data streams from the hardware filter chain (8) and the software filter chain (9) by a multiplexer (12) to provide filtered data frames,
- transmitting (S6) filtered data frames to the other of the trusted domain (4) and the untrusted domain (5).

## Patentansprüche

1. Filtervorrichtung (1) zur Kommunikation zwischen einer vertrauenswürdigen Domäne (4) und einer nicht vertrauenswürdigen Domäne (5), umfassend:
eine zentrale Verarbeitungseinheit, CPU (2), und
eine hardwareprogrammierbare Vorrichtung (3), die mit der CPU (3) verbunden ist, wobei die hardwareprogrammierbare Vorrichtung (3) umfasst:
eine erste Eingabe/Ausgabe-, I/O-, Schnittstelle (6a), die mit der nicht vertrauenswürdigen Domäne (5) verbunden ist, und eine zweite I/O-Schnittstelle (6b), die mit der vertrauenswürdigen Domäne (4) verbunden ist, wobei die erste und die zweite I/O-Schnittstelle (6a, 6b) konfiguriert sind, um Datenrahmen von der jeweiligen nicht vertrauenswürdigen und vertrauenswürdigen Domäne (4, 5) zu empfangen und an diese zu übertragen,
einen ersten Filterkanal (7a), der konfiguriert ist, um einen von der ersten I/O-Schnittstelle (6a) empfangenen ersten Datenrahmen zu filtern und der zweiten I/O-Schnittstelle (6b) einen ersten gefilterten Datenrahmen bereitzustellen, und
einen zweiten Filterkanal (7b), der konfiguriert ist, um einen von der zweiten I/O-Schnittstelle (6b) empfangenen zweiten Datenrahmen zu filtern und der ersten I/O-Schnittstelle (6a) einen zweiten gefilterten Datenrahmen bereitzustellen;
wobei jeder der ersten und zweiten Filterkanäle (7a, 7b) umfasst:
mindestens zwei Filterketten, die aus einer Hardware-Filterkette (8) und/oder einer Software-Filterkette (9) ausgewählt sind, wobei die Hardware-Filterkette (8) und die Software-Filterkette (9) eine Hardware-Filterschaltung (10) umfassen und die Software-Filterkette (9) eine Software-Schaltung (11) umfasst, die mit der CPU (2) verbunden ist,
einen Demultiplexer (12), der konfiguriert ist, um die jeweiligen ersten und zweiten Datenrahmen von den jeweiligen ersten und zweiten I/O-Schnittstellen (6a, 6b) zu empfangen, Datenströme der jeweiligen ersten und zweiten Datenrahmen gemäß mindestens einem Attribut zu klassifizieren und die Datenströme in die Hardware-Filterkette (8) und die Software-Filterkette (9) gemäß ihrer Klassifizierung einzuspeisen, um gefilterte Datenströme bereitzustellen,
einen Multiplexer (13), der konfiguriert ist, um die gefilterten Datenströme aus der Hardware-Filterkette (8) und der Software-Filterkette (9) zu kombinieren, um jeweilige erste und zweite gefilterte Datenrahmen bereitzustellen und die ersten und zweiten gefilterten Datenrahmen an die jeweilige zweite und erste I/O-Schnittstelle (6a, 6b) zu übertragen.

2. Filtervorrichtung (1) nach Anspruch 1, wobei jede der Hardware-Schaltungen (10) einen Stromfilter (101) und einen Ratenbegrenzer (102) umfasst, der konfiguriert ist, um eine Datenrate des Datenstroms zu begrenzen.

3. Filtervorrichtung (1) nach Anspruch 1 oder 2, wobei die Hardware-Filterschaltungen (10) der Software-Filterketten (9) und die Hardware-Filterketten (8) der ersten und zweiten Filterkanäle (7a, 7b) identisch sind.

4. Filtervorrichtung (1) nach einem der vorhergehenden Ansprüche, wobei die Software-Schaltung (11) in den Software-Filterketten (9) stromabwärts der Hardware-Schaltung (10) angeordnet ist.

5. Filtervorrichtung (1) nach einem der vorhergehenden Ansprüche, wobei der erste Filterkanal (7a) und/oder der zweite Filterkanal (7b) eine Vielzahl von Hardware-Filterketten (8a-8c) und/oder eine Vielzahl von Software-Filterketten (9a-9c) umfasst, die zwischen dem jeweiligen Demultiplexer (12) und Multiplexer (13) gekoppelt sind, wobei die jeweiligen Demultiplexer (12) und Multiplexer (13) konfiguriert sind, um die empfangenen Datenrahmen gemäß mindestens einem Attribut zu klassifizieren, die klassifizierten Datenströme der Datenrahmen in eine der jeweiligen Vielzahl von Hardware-Filterketten (8a-8c) und/oder der Vielzahl von Software-Filterketten (9a-9c) gemäß ihrer Klassifizierung einzuspeisen und die gefilterten Datenströme zu kombinieren, um die ersten und zweiten gefilterten Rahmen bereitzustellen.

6. Filtervorrichtung nach einem der vorhergehenden Ansprüche, wobei die I/O-Schnittstellen (6a, 6b) als eine Media Access Control-, MAC-, Schnittstelle konfiguriert sind.

7. Filtervorrichtung (1) nach einem der vorhergehenden Ansprüche, wobei die CPU (2) einen Translator- und Inspector-Softwareblock (21a, 21b) umfasst, der mit der Software-Schaltung (11) verbunden und konfiguriert ist, um einen Zustand der von der Software-Schaltung empfangenen Daten zu inspizieren und vorgefilterte Daten von der Software-Filterkette (9) zu empfangen und zwischen verschiedenen Protokollen der empfangenen Daten zu übersetzen.

8. Filtervorrichtung (1) nach einem der vorhergehenden Ansprüche, wobei die CPU (2) einen Steuerungs- und Überwachungs-Softwareblock (20) umfasst, der konfiguriert ist, um nur mit der zweiten I/O-Schnittstelle (6b) der mit der vertrauenswürdigen Domäne (4) verbundenen programmierbaren Hardware (3) zu kommunizieren.

9. Filtervorrichtung (1) nach einem der vorhergehenden Ansprüche, wobei die Software-Schaltung (11) als Pufferspeicher (111) für Rahmen, insbesondere als FIFO-Puffer, konfiguriert ist, um einen Datenaustausch mit der CPU (2) durchzuführen.

10. Computersystem (100) für ein Luftfahrzeug, umfassend eine vertrauenswürdige Domäne (4), eine nicht vertrauenswürdige Domäne (5) und eine Filtervorrichtung (1) nach einem der vorhergehenden Ansprüche, die mit der vertrauenswürdigen Domäne (4) und der nicht vertrauenswürdigen Domäne (5) des Luftfahrzeugs (1) verbunden ist.

11. Verfahren zur Kommunikation zwischen einer vertrauenswürdigen Domäne (4) und einer nicht vertrauenswürdigen Domäne (5), umfassend:
- Empfangen (S1) von Datenrahmen von einer der vertrauenswürdigen Domäne (4) und der nicht vertrauenswürdigen Domäne (5) durch eine Eingabe/Ausgabe-, I/O-, Schnittstelle (6a, 6b),
- Klassifizieren (S2) der empfangenen Datenrahmen gemäß mindestens einem Attribut durch einen Demultiplexer (12), um klassifizierte Datenströme bereitzustellen,
- Einspeisen (S3) der klassifizierten Datenströme in mindestens zwei Filterketten, die aus einer Hardware-Filterkette (8) und/oder einer Software-Filterkette (9) ausgewählt sind, gemäß ihrer Klassifizierung, wobei die Hardware-Filterkette (8) und die Software-Filterkette (9) eine Hardware-Filterschaltung (10) auf einer hardwareprogrammierbaren Vorrichtung (3) umfassen, und wobei die Software-Filterkette (9) eine Software-Schaltung (11) umfasst, die mit einer zentralen Verarbeitungseinheit, CPU (2), verbunden ist,
- Filtern (S4) der klassifizierten Datenströme durch die Hardware- und Software-Filterschaltungen (10, 11), um gefilterte Datenströme bereitzustellen,
- Kombinieren (S5) der gefilterten Datenströme aus der Hardware-Filterkette (8) und der Software-Filterkette (9) durch einen Multiplexer (12), um gefilterte Datenrahmen bereitzustellen,
- Übertragen (S6) gefilterter Datenrahmen an die jeweils andere der vertrauenswürdigen Domäne (4) und der nicht vertrauenswürdigen Domäne (5).

## Revendications

1. Dispositif de filtrage (1) pour la communication entre un domaine de confiance (4) et un domaine sans confiance (5), comprenant :
une unité centrale de traitement, CPU (2), et
un dispositif programmable par matériel (3) connecté à la CPU (3), le dispositif programmable par matériel (3) comprenant :
une première interface d'entrée/sortie, I/O (6a), connectée au domaine sans confiance (5) et une seconde interface I/O (6b) connectée au domaine de confiance (4), dans lequel les première et seconde interfaces I/O (6a, 6b) sont configurées pour recevoir et transmettre des trames de données en provenance et à destination du domaine sans confiance et du domaine de confiance (4, 5) respectifs,
un premier canal de filtrage (7a) configuré pour filtrer une première trame de données reçue de la première interface I/O (6a) et fournir une première trame de données filtrée à la seconde interface I/O (6b), et
un second canal de filtrage (7b) configuré pour filtrer une seconde trame de données reçue de la seconde interface I/O (6b) et fournir une seconde trame de données filtrée à la première interface I/O (6a) ;
dans lequel chacun des premier et second canaux de filtrage (7a, 7b) comprend :
au moins deux chaînes de filtrage choisies parmi une chaîne de filtrage matérielle (8) et/ou une chaîne de filtrage logicielle (9), dans lequel la chaîne de filtrage matérielle (8) et la chaîne de filtrage logicielle (9) comprennent un circuit de filtrage matériel (10) et la chaîne de filtrage logicielle (9) comprend un circuit logiciel (11) connecté à la CPU (2),
un démultiplexeur (12) configuré pour recevoir les première et seconde trames de données respectives des première et seconde interfaces I/O (6a, 6b) respectives, classer des flux de données des première et seconde trames de données respectives selon au moins un attribut, et introduire les flux de données dans la chaîne de filtrage matérielle (8) et la chaîne de filtrage logicielle (9) selon leur classement pour fournir des flux de données filtrés,
un multiplexeur (13) configuré pour combiner les flux de données filtrés provenant de la chaîne de filtrage matérielle (8) et de la chaîne de filtrage logicielle (9) pour fournir des première et seconde trames de données filtrées respectives et transmettre les première et seconde trames de données filtrées aux seconde et première interfaces I/O (6a, 6b) respectives.

2. Dispositif de filtrage (1) selon la revendication 1, dans lequel chacun des circuits matériels (10) comprend un filtre de flux (101) et un limiteur de débit (102) configuré pour limiter un débit de données du flux de données.

3. Dispositif de filtrage (1) selon la revendication 1 ou 2, dans lequel les circuits de filtrage matériels (10) des chaînes de filtrage logicielles (9) et les chaînes de filtrage matérielles (8) des premier et second canaux de filtrage (7a, 7b) sont identiques.

4. Dispositif de filtrage (1) selon l'une quelconque des revendications précédentes, dans lequel le circuit logiciel (11) est agencé en aval du circuit matériel (10) dans les chaînes de filtrage logicielles (9).

5. Dispositif de filtrage (1) selon l'une quelconque des revendications précédentes, dans lequel le premier canal de filtrage (7a) et/ou le second canal de filtrage (7b) comprend une pluralité de chaînes de filtrage matérielles (8a-8c) et/ou une pluralité de chaînes de filtrage logicielles (9a-9c) couplées entre le démultiplexeur (12) et le multiplexeur (13) respectifs, dans lequel les démultiplexeurs (12) et multiplexeurs (13) respectifs sont configurés pour classer les trames de données reçues selon au moins un attribut, introduire les flux de données classés des trames de données dans l'une de la pluralité respective de chaînes de filtrage matérielles (8a-8c) et/ou de la pluralité de chaînes de filtrage logicielles (9a-9c) selon leur classement et combiner les flux de données filtrés pour fournir les première et seconde trames filtrées.

6. Dispositif de filtrage selon l'une quelconque des revendications précédentes, dans lequel les interfaces I/O (6a, 6b) sont configurées comme une interface de contrôle d'accès au support, MAC.

7. Dispositif de filtrage (1) selon l'une quelconque des revendications précédentes, dans lequel la CPU (2) comprend un bloc logiciel traducteur et inspecteur (21a, 21b) connecté au circuit logiciel (11) et configuré pour inspecter un état des données reçues du circuit logiciel et recevoir des données pré-filtrées de la chaîne de filtrage logicielle (9) et traduire entre différents protocoles des données reçues.

8. Dispositif de filtrage (1) selon l'une quelconque des revendications précédentes, dans lequel la CPU (2) comprend un bloc logiciel de commande et de surveillance (20) configuré pour communiquer uniquement avec la seconde interface I/O (6b) du matériel programmable (3) connecté au domaine de confiance (4).

9. Dispositif de filtrage (1) selon l'une quelconque des revendications précédentes, dans lequel le circuit logiciel (11) est configuré comme une mémoire tampon (111) de trames, en particulier un tampon FIFO, pour effectuer un échange de données avec la CPU (2).

10. Système informatique (100) pour un aéronef, comprenant un domaine de confiance (4), un domaine sans confiance (5), et un dispositif de filtrage (1) selon l'une quelconque des revendications précédentes connecté au domaine de confiance (4) et au domaine sans confiance (5) de l'aéronef (1).

11. Procédé de communication entre un domaine de confiance (4) et un domaine sans confiance (5), comprenant :
- la réception (S1) de trames de données en provenance de l'un du domaine de confiance (4) et du domaine sans confiance (5) par une interface d'entrée/sortie I/O (6a, 6b),
- le classement (S2) des trames de données reçues selon au moins un attribut par un démultiplexeur (12) pour fournir des flux de données classés,
- l'introduction (S3) des flux de données classés dans au moins deux chaînes de filtrage choisies parmi une chaîne de filtrage matérielle (8) et/ou une chaîne de filtrage logicielle (9) selon leur classement, dans lequel la chaîne de filtrage matérielle (8) et la chaîne de filtrage logicielle (9) comprennent un circuit de filtrage matériel (10) sur un dispositif programmable par matériel (3), et dans lequel la chaîne de filtrage logicielle (9) comprend un circuit logiciel (11) connecté à une unité centrale de traitement, CPU (2),
- le filtrage (S4) des flux de données classés par les circuits de filtrage matériel et logiciel (10, 11) pour fournir des flux de données filtrés,
- la combinaison (S5) des flux de données filtrés provenant de la chaîne de filtrage matérielle (8) et de la chaîne de filtrage logicielle (9) par un multiplexeur (12) pour fournir des trames de données filtrées,
- la transmission (S6) de trames de données filtrées à l'autre du domaine de confiance (4) et du domaine sans confiance (5).
